Europäisches Patentamt

European Patent Office

Office européen des brevets

(19)

(11) Veröffentlichungsnummer: **0 067 328**
**B1**

(12) # EUROPÄISCHE PATENTSCHRIFT

(45) Veröffentlichungstag der Patentschrift:
**11.09.85**

(51) Int. Cl.⁴: **H 02 K 5/15,** H 02 K 21/12

(21) Anmeldenummer: **82104580.4**

(22) Anmeldetag: **26.05.82**

(54) **Lagerflansch für elektrische Kleinstmotoren.**

(30) Priorität: **15.06.81 DE 8117673 U**

(43) Veröffentlichungstag der Anmeldung:
**22.12.82 Patentblatt 82/51**

(45) Bekanntmachung des Hinweises auf die Patenterteilung:
**11.09.85 Patentblatt 85/37**

(84) Benannte Vertragsstaaten:
**CH FR GB IT LI SE**

(56) Entgegenhaltungen:
**DE - A - 2 736 705**
**DE - B - 2 816 098**

(73) Patentinhaber: **DIETER GRÄSSLIN Feinwerktechnik,
Bundesstrasse 36, D-7742 St. Georgen (DE)**

(72) Erfinder: **Thoma, Friedrich Xaver, Leimengrubweg 12,
D-7612 Haslach i.k. (DE)**

(74) Vertreter: **Thoma, Friedrich Xaver, Buchenstrasse 20,
D-7612 Haslach i.K. (DE)**

EP 0 067 328 B1

## Beschreibung

Die Erfindung betrifft einen Lagerflansch für elektrische Kleinstmotoren mit den Merkmalen nach dem ersten Teil des Patentanspruchs.

Aus der DE-B-2 816 098 ist ein Kleinelektromotor bekannt, der mit einem einseitigen Lagerflansch aus Kunststoff versehen ist, auf welchem konzentrisch ein Lagerelement angeordnet ist. An diesem Lagerflansch sind außerdem Formlöcher für den Ein- und den Durchgriff der Pole des auf der Außenseite des Lagerflansches liegenden Statorblechs. Am äußeren Umfang ist der Lagerflansch einstückig mit einem nach innen gerichteten koaxial verlaufenden zylinderförmigen Mantel versehen, zur berührungssicheren, isolierenden Abdeckung der äußeren Umfangsfläche der auf einem Spulenkörper gewickelten Spule des Motors.

Aus der DE-B-2 736 705 ist ein Getriebemotor für den Antrieb u. a. von Uhren bekannt, bei dem am einseitigen Lagerflansch aus Kunststoff einstückig ein Spulenkörper angeformt ist. Auch dieser Lagerflansch ist mit kreiszylindrisch angeordneten Formlöchern für den Ein- und den Durchgriff der Pole des auf der Außenseite des Lagerflansches liegenden Statorblechs versehen. Außerdem befinden sich im koaxial verlaufenden inneren Umfang des Spulenkörperbodens koaxial verlaufende zu den Formlöchern ausgerichtete Führungsnuten für die Pole des Stators.

Der Erfindung liegt die Aufgabe zugrunde, mit einem Lagerflansch der eingangs genannten Art eine zweckmäßige, nur wenige Einzelteile umfassende, wirtschaftliche Anordnung für derartige Kleinstmotore zu schaffen.

Diese Aufgabe wird mit den Merkmalen im kennzeichnenden Teil des Patentanspruchs gelöst.

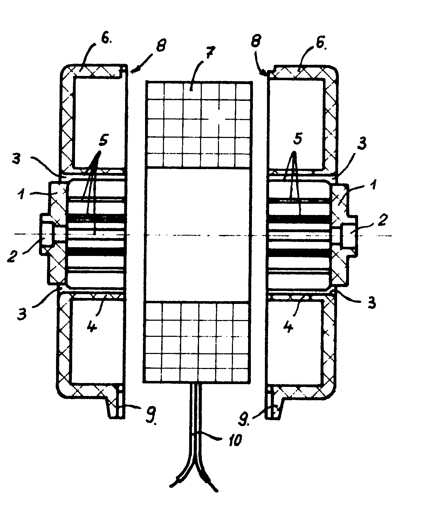

Ein Ausführungsbeispiel ist in der Zeichnung dargestellt und wird im folgenden näher erläutert.

Die Figur zeigt zwei formgleiche Lagerflansche 1 mit am oberen Umfang einseitig und einstückig angeordnetem koaxial verlaufendem zylinderförmigem Mantel 6. Die dort außerdem einseitig und einstückig angeordnete koaxial verlaufende im Außendurchmesser gegenüber dem Mantel 6 kleinere zylinderförmige Ausbildung 4 ist im Bereich des inneren Umfangs mit zu den Formlöchern 3 ausgerichteten Führungsnuten 5 versehen, zur Führung und Fixierung der nicht näher dargestellten Pole der Statoren des Motors, die auf der Außenseite des jeweiligen Lagerflansches 1 vorgesehen sind. 7 bezeichnet eine freitragende spulenkörperlos hergestellte Spule aus thermisch verbackbarem Draht. Die beiden Lagerflansche 1 umschließen die Spule 7 mechanisch und elektrisch zuverlässig. Die Stirnseiten der Mäntel 6 können erforderlichenfalls mit Falzen versehen sein. Die Falze sind mit 8 bezeichnet. 9 kennzeichnet eine Zugentlastung für die Spulenanschlußdrähte 10.

## Patentanspruch

Lagerflansch aus Kunststoff für elektrische Kleinstmotore, mit einem konzentrisch angeordneten Lagerelement (2), mit im Lagerflansch (1) auf einem kreiszylindrischen Radius in bestimmten Abständen zueinander angeordneten Formlöchern (3) für den Ein- und den Durchgriff der Pole des auf der Außenseite des Lagerflansches (1) vorgesehenen Statorblechs, mit einer auf der Innenseite des Lagerflansches (1) einstückig angeordneten einseitig koaxialverlaufenden zylindrischen Ausbildung (4), in der am inneren Umfang koaxial verlaufende, zu den Formlöchern (3) ausgerichtete Führungsnuten (5) für die Stator-Pole vorgesehen sind, dadurch gekennzeichnet, daß am Umfang des Lagerflansches (1) ein einseitig und mit dem Flansch einstückig und koaxial verlaufender zylinderförmiger Mantel (6) zur berührungssicher isolierenden Abdeckung der äußeren Umfangsmantelfläche der Spule (7) des Motors angeordnet ist und daß eine freitragende spulenkörperlos hergestellte Spule (7) von zwei formgleichen und über den jeweiligen Mantel (6) stoßschlüssig miteinander in Eingriff stehenden Lagerflanschen (1) allseitig vollständig umschlossen ist.

## Claim

A synthetic resin bearing shield for small electric motors, having a concentrically arranged bearing element (2); moulded openings (3) arranged in the bearing shield (1) on a circular cylindrical radius at specific intervals from one another and which permit the insertion and passage of the poles of the stator plate which is provided on the outside of the bearing shield (1); a cylindrical formation (4) integrally arranged on the inside of the bearing shield (1) extending coaxially on one side, and containing guide grooves (5) for the stator poles, which grooves extend coaxially at the inner periphery and are in alignment with the moulded openings (3), characterized in that, at the periphery of the bearing shield (1), an internal cylindrical casing (6) is arranged which extends on one side coaxially with the shield and which provides an insulating covering which is safe from contact of the outer peripheral surface of the coil (7) of the motor, and that an unsupported coil (7), without a coil body, is completely surrounded on all sides by two bearing shields (1) which are identical in shape and which engage with one another sealed against impact by way of the casings (6).

## Revendication

Flasque palier en matière plastique pour moteurs électriques miniatures, comportant un élément de palier (2) disposé concentriquement, présentant par ailleurs des orifices de moulage (3) disposés dans le flasque palier (1) suivant un rayon cylindrique circulaire des distances déterminées les unes aux autres pour l'insertion et la pénétration des pôles de la tôle statorique prévue sur le côté extérieur du flasque palier (1), et présentant encore une formation (4) cylindrique s'étendant unilatéralement de façon coaxiale amenage sur le côté intérieur du flasque palier (1) d'une seule pièce avec celui-ci, dans la dite formation étant prévues des rainures de guidage (5) pour les pôles de stators, ces rainures s'étendant coaxialement sur la périphérie de la formation de façon à être tournées vers les orifices de moulage (3), caractérisé par le fait que sur la périphérie du flasque palier (1) est disposée une enveloppe (6) de forme cylindrique s'étendant unilatéralement et coaxialement au flasque d'une pièce avec celui-ci pour le recouvrement isolant et protecteur contre les contacts accidentels de la surface périphérique extérieure de la bobine (7) du moteur tournée vers l'enveloppe et qu'une bobine (7) auto-portante réalisée sans mandrin de support est enfermée de toute part complètement par deux flasques paliers de forme identique et serrés l'un contre l'autre a butée par l'intermédiaire des enveloppes respectives (6).